# EUROPEAN PATENT SPECIFICATION

(11) **EP 0 912 340 B1**
(45) Date of publication and mention of the grant of the patent: **22.03.2000**
(21) Application number: 97928286.0
(22) Date of filing: 25.06.1997
(51) Int. Cl.: B32B 27/08, B32B 27/30, B32B 27/34, B65D 65/40

(54) **LAMINATED PACKAGE MATERIAL, METHOD FOR MANUFACTURING THE SAME, AND A PACKAGE**
MEHRSCHICHTIGES VERPACKUNGSMATERIAL, VERFAHREN ZUR HERSTELLUNG DESSELBEN, SOWIE VERPACKUNG
MATERIAU D'EMBALLAGE CONTRECOLLE, PROCEDE DE FABRICATION ET EMBALLAGE CORRESPONDANT

(30) Priority: 17.07.1996 FI 962877
(43) Date of publication of application: 06.05.1999
(73) Proprietor: Enso Oy, 00160 Helsinki (FI)
(72) Inventor: SALSTE, Matti, FIN-55420 Imatra (FI); PENTTINEN, Tapani, FIN-49210 Huutjärvi (FI); JÄRVINEN, Jalliina, FIN-15900 Lahti (FI); SALMINEN, Risto, FIN-48600 Karhula (FI); MÄÄTTÄ, Terttu, FIN-80140 Joensuu (FI); KUUPPO, Tuomo, FIN-55800 Imatra (FI)
(74) Representative: Saijonmaa, Olli-Pekka
(86) International application number: FI9700407
(87) International publication number: WO9803332

(56) References cited:
- EP-A- 0 318 771
- EP-A- 0 341 937

## Description

The present invention relates to a laminated packaging material which is especially suitable for heat-sealable packages for liquid food, and which comprises a core of paper or cardboard, and oxygen and aroma proof barrier layers of ethylene-vinyl alcohol copolymer (EVOH) and polyamide (PA). Further, the invention relates to a manufacturing method of the same and to a sealed package for liquid food manufactured of the material, e.g. a milk or juice carton.

Laminated packaging materials used for liquid food packages and based on paper or cardboard are usually provided with one or more barrier layers, the purpose of which is to prevent the contamination of the packed product due to oxidation, and to preserve the product's taste and vitamines contained by it. Of polymeric materials, EVOH is known to have excellent barrier properties, but also polyamide has been used in liquid package cardboards because of its good barrier properties.

An example of the use of polyamide in a liquid package cardboard is described in the publication print FI 86610 and, correspondingly, the use of EVOH is described, for example, in the publication print FI 89567. In accordance with both the prints, the packaging material has been laminated on both sides with an external heat-sealing layer of LDPE (low-density polyethylene) so that the cardboard layer and the barrier layer of polyamide or EVOH is interposed between the heat-sealing layers. In the patent publication US 4 701 360, there are known laminated packaging materials for liquid packages which may, besides an EVOH layer, include another oxygen proof barrier layer e.g. of polyamide. According to the publication, the EVOH layer is situated on the surface of the packaging material so that it also acts as a heat-sealing layer. In this case, EVOH is in contact with the packed liquid, which is a poorer solution with regard to the barrier properties of the material than the one in which the EVOH layer would be protected by a separate heat-sealing layer.

In the EP publication 0 318 771 there is disclosed a packaging laminate comprising EVOH and polyamide layers in combination with an aluminium foil. According to this publication the aluminium foil constitutes the main gas barrier of the laminate, and this barrier has been enhanced by an EVOH layer in order to compensate for small cracks that might occur in the foil. An optional polyamide (nylon) layer may be included to absorb moisture penetrating through said cracks. According to the teachings this layer is in general not necessary but preferred when the laminate is in danger of being subjected to strong external stresses, that is, in danger of developing cracks. If a polyamide layer is included it would have a thickness of 15 -25 µm, preferably 20 µm. The aluminium foil in such a laminate forms an excellent oxygen barrier, but a drawback in the high cost of the foil.

The problem with EVOH in cardboards for liquid packages is that it is mechanically weak. For example, upon manufacture of carton-shaped packages, the material has to be folded, which easily causes cracks in the EVOH layer weakening its barrier properties. In addition, the EVOH layer tends to form holes in the area of its joints when the package is heat-sealed. This is caused by steam pressure which tries to escape from the cardboard layer because of heat and which EVOH cannot retain. In this respect, polyamide is a better material than EVOH, because it is less vulnerable to cracking upon folding, and it can also absorb moisture released from the cardboard. Because the barrier properties of polyamide are not equal to those of EVOH, it cannot as such replace EVOH, but it has been tried to solve these problems by combining EVOH and polyamide in a packaging material. Thus, the publication print FI 96752 discloses a method for solving the problem related with the formation of holes by a suitable choice of material for the barrier layer, one alternative being a compound of EVOH and polyamide. The purpose is to retain the viscosity and strength of the barrier layer material in the heat-sealing temperature. Also the patent publication US 4 977 004 disclosing a food package cardboard comprising two separate EVOH layers recommends the compounding of EVOH and polyamide to improve the viscosity of the layer. However, a drawback of these solutions is that the barrier properties of EVOH suffer due to the compounded polyamide. The best way to make the material oxygen and aroma proof is to include a continuous, substantially clean EVOH layer in the packaging material. In addition, it has been discovered that the compound of EVOH and polyamide is more difficult to extrude than pure polymeric materials, mainly due to the tendency of the compound to gel.

It is the object of the present invention to provide a solution for combining EVOH and polyamide especially in a laminated packaging material for liquid food without the above-mentioned drawbacks. Thus, it is the object of the invention to prevent the formation of holes in the layer containing EVOH, and, simultaneously, to keep the amount of polymer in the layers as low as possible.

The above-mentioned objects are obtained by a laminated packaging material (1) especially for heat-sealable liquid food packages, comprising a core (3) of paper or cardboard and oxygen and aroma proof barrier layers (4.5) consisting of ethylene-vinyl alcohol copolymer and polyamide layers, characterized in that the weight of the polyamide layer (4) is in the range of 1 to 8 g/m², that the layer (5) of ethylene-vinyl alcohol copolymer and the layer (4) of polyamide are joined together without an intermediate adhesive layer, and that the material includes polymeric heat-sealing layers (2,7) on both sides so that the core (3) and the said barrier layers (4,5) are situated between the heat-sealing layers.

Thus, the present invention is based on the observation that the excellent barrier properties of EVOH and the viscosity and absence of holes in polyamide may be combined, without deteriorating either property, by joining the barrier layers of the said materials directly to each other without an intermediate adhesive layer, such as a Surlyn layer, which has typically been used to adhere different layers in liquid package cardboards. The good adhesion of the EVOH and polyamide layers observed in accordance with the present invention is supposedly due partly to a chemical reaction between polymers and partly to polarity, i.e. the setting of the negatively charged EVOH and the positively charged polyamide. The absence of the adhesive layer reduces the number of layers compared to other conventional multi-layer structures, which means the extrusion process becomes simpler and causes a saving in materials. The saving in materials and the lighter structure may also be achieved because the necessary barrier properties and the absence of holes may be provided with smaller amounts of EVOH and polyamide than before. In general, the laminated polymeric layers of cardboard potentially have a negative effect on the smell and taste of a product, and, for this reason, the invention serves the general goal to keep the amount of polymers in a packaging material as low as possible. The packaging material of the present invention can also endure the sterilization processes included in aseptic packaging.

In accordance with the present invention, it is characteristic of EVOH and polyamide that they can be joined together or to a core of paper or cardboard in the packaging material without an intermediate adhesive. An adhesive layer may instead be necessary between the barrier layers and the heat-sealing layer on the material surface. The heat-sealing layers on both sides of the material may advantageously be made of polyolefine, such as LDPE. For example, surlyn or LDPE modified with maleic anhydride, may be used as adhesive.

In case the barrier layers are arranged in the packaging material so that the polyamide layer is closer to the paper or cardboard core, the polyamide protects the EVOH layer by receiving and absorbing moisture released from the cardboard layer upon heat-sealing. The EVOH layer is protected against the formation of holes, and it retains its impermeability to oxygen and aromas in the joints. However, it is also possible to place the EVOH layer against the paper or cardboard core, which is less advantagous for the tightness of the layers, but which, on the other hand, has the advantage of the excellent adhesion of EVOH to paper or cardboard. In this case, no limits have to be set for the quality of paper or cardboard used in the packaging material.

For the barrier properties, the sufficient amount of polyamide in the packaging material is 1-8 g/m², preferably 2-5 g/m², and the amount of EVOH likewise 1-8 g/m², preferably 2-5 g/m². In known packaging materials with a barrier layer either of EVOH or polyamide, the typical amounts have been 6-8 g EVOH/m² and 8-10 g PA/m². Thus, the separate, opposite EVOH and polymer layers in the packaging material of the present invention do not increase the amount of polymer required by the barrier layers in the packaging material, but, rather on the contrary, they may be able to reduce it. The amount of polymer in the heat-sealing layer may be 5-50 g/m² on both sides of the material.

The method of the present invention for manufacturing the said laminated packaging material, in which polymeric laminate layers are placed on a core of paper or cardboard by extrusion, is characterized in that EVOH and polyamide are placed against each other as molten webs, whereafter they are forwarded to the core in a combined web. The barrier materials then have time to become effectively amalgamated before they meet the paper or cardboard, and, thereafter, solidify.

A liquid food package of the present invention, which is manufactured from the said packaging material by heat-sealing, is typically a sealed carton mainly of rectangular shape, and it may contain, for example, milk, cream, sour milk, yoghurt, juice, or wine. However, it may be mentioned that the polymeric barrier layers do not act as an oxygen or aroma barrier in an unopened package only, but they also help to preserve the product even after the package has been opened.

The invention is next described in more detail with the help of embodiment examples and reference tests, and referring to the enclosed drawings in which:
Fig. 1 is a schematic view of a laminated packaging material according to the present invention;
Fig. 2 is a schematic view of another laminated packaging material of the present invention; and
Fig. 3 describes extrusion of polymeric layers in the material and their placement on the cardboard.

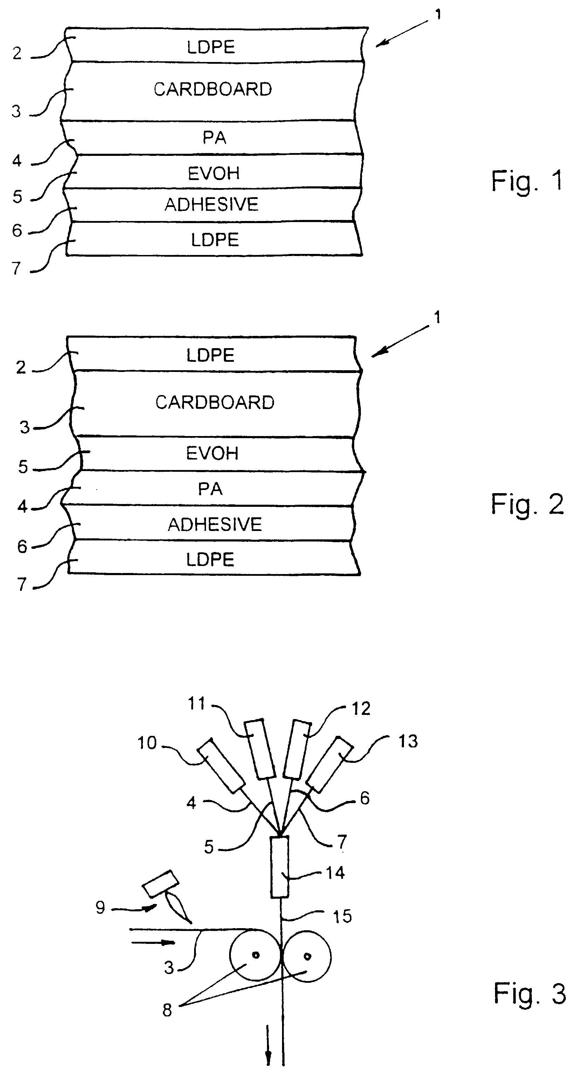

The second surface layer 2 of the packaging material 1 of the present invention, forming the outer surface of the package to be manufactured and acting as a heat-sealing layer in the package, is made of low-density polyethylene (LDPE). Next, there is the core 3 manufactured of cardboard, e.g. chemithermo-mechanical pulp (CTMP). Thereafter, there are the oxygen and aroma proof barrier layers 4, 5, which are joined together and to the cardboard core 3 without intermediate adhesive layers. In the embodiment of Fig. 1, the barrier layer 4 against the core 3 is polyamide (PA), and the second barrier layer 5 adhered to the polyamide layer is ethylene-vinyl alcohol copolymer (EVOH). The EVOH layer 5 is followed by an adhesive layer 6 of, for example, LDPE modified with maleic anhydride, the purpose of which is to bind the EVOH layer to the second surface layer 7 of the material, which is LDPE. Upon binding, the said surface layer 7 acts as a heat-sealing layer joining the second surface layer 2, and it forms an inner surface which is in contact with the liquid in the finished package.

The package material 1 of Fig. 2 is similar to that in Fig. 1, besides the order of barrier layers 4, 5 of EVOH and polyamide. In Fig. 2, an EVOH layer 5 is placed against the cardboard core 3, the following polyamide layer 4 being joined to the heat-sealable LDPE layer 7 forming the inner surface of the package by an adhesive layer 6.

In Fig. 3, there is schematically shown the manufacture of packaging material 1 according to Fig. 1, which is carried out by extruding the polymeric layers 2, 4-7 to a moving cardboard web 3 forming the material core, the extrusion process being controlled by rollers 8. Before coating, the cardboard web 3 is subjected to corona treatment 9. The four superimposed polymeric layers 4-7 to be placed on the cardboard are each led from their own containers 10-13, from where the polymers are guided to a nozzle 14 which amalgamates the molten polymers to each other in layers and feeds the polymers to the cardboard 3 in one combined web 15. Extrusion of a polymeric heat-sealing layer 2 to be placed on the opposite side of the cardboard web 3, not shown in Fig. 3, may take place substantially in a similar way. The amounts of polymer to be extruded may be e.g. 2-10 g/m² in the barrier layer 4, 2-10 g/m² in the barrier layer 5, 3-10 g/m² in the adhesive layer 6, 10-50 g/m² in the heat-sealing layer 2 opposite the material, which is not shown in Fig. 3. The weight of the cardboard core 3 may be 200-400 g/m².

### Reference tests

A laminated packaging material according to the invention was manufactured by forming it, in accordance with Fig. 1, from a LDPE layer 2 with a weight of 20 g/m², a cardboard layer 3, a polyamide layer 4 with a weight of 5 g/m², an EVOH layer 5 with a weight of 5 g/m², an adhesive layer 6 with a weight of 5 g/m², and a LDPE layer 7 with a weight of 41 g/m². This was compared to three reference materials, the first of which (reference material 1) comprised a LDPE layer with a weight of 14 g/m², a cardboard layer, an EVOH layer with a weight of 5 g/m², an adhesive layer with a weight of 6 g/m², and a LDPE layer with a weight of 45 g/m²; the second (reference material 2) comprised a LDPE layer with a weight of 20 g/m², a cardboard layer, a polyamide layer with a weight of 5 g/m², an adhesive layer with a weight of 6 g/m², and a LDPE layer with a weight of 41 g/m²; and the third (reference material 3) comprised a LDPE layer with a weight of 20 g/m², a cardboard layer, a barrier layer including as a compound 47.5% EVOH, 47.5% polyamide, and 5% ethylene-methyl acrylate copolymer, with a weight of 5 g/m², an adhesive layer with a weight of 6 g/m², and a LDPE layer with a weight of 41 g/m².

Of the said materials, the oxygen density was first determined by measuring the amount of oxygen which penetrated the material at 23°C per square meter of the surface in 24 hours as an average of penetration from 2-4 test specimens. The results are shown in Table 1.

**Table 1**

| Material | O₂ penetration (cm³/m²/24h) | Average thickness of the material (µm) |
|---|---|---|
| Invention | 2.56 | 506 |
| Reference material 1 | 2.87 | 503 |
| Reference material 2 | 7.0 | 505 |
| Reference material 3 | 11.5 | 512 |

The vulnerability of the materials to form holes in the heat-sealing process was thereafter tested by a so-called bubbling test, in which hot-air blasting was used. The test was carried out as follows:

The material specimen to be tested was placed to a stand which moved back and forth with a constant speed of 200 mm/s under hot-air blasting. The distance from the blower to the surface of the material specimen was 7 mm, and the temperature of the blast air 350°C, and the relative moisture 100%. The blasting made the plastic to melt. The resistance of the material to hole formation could then be determined on the basis of how many times the material passed the blower before the first holes were formed, and how the hole formation developed while the movement continued. The hole formation of the material was researched and rated on a four-step scale which was as follows:
E = undamaged; H = very few holes; V = a few holes; and P = many holes. The results are shown in Table 2.

**Table 2**

| Number of times passed | 1 | 2 | 3 | 4 | 5 | 6 | 7 | 8 | 9 | 10 |
|---|---|---|---|---|---|---|---|---|---|---|
| Invention | E | E | E | E | E | E | E | E | E | E |
| Reference material 1 | E | E | E | H | H | V | P | P | | |
| Reference material 2 | E | E | E | E | E | H | H | H | H | H |
| Reference material 3 | E | E | E | E | E | H | H | H | V | V |

The results show the packaging material of the present invention to be better than the three reference materials. The superiority was especially evident in the bubbling test measuring the vulnerability of the material to hole formation, in which the material of the invention lasted 10 passes (5 reciprocating movements) under hot-air blasting without hole formation. The test was not continued further, because the cardboard core of the material would have started to become charred. Hole formation was observed in all three reference materials at the latest after six passes, and especially the reference material 1 comprising the mere EVOH layer was totally damaged already after seven passes due to abundant hole formation.

It is obvious for those skilled in the art that various embodiments of the invention are not limited to the above examples, but they can vary within the scope of the enclosed claims.

## Claims

1. A laminated packaging material (1) especially for heat-sealable liquid food packages, comprising a core (3) of paper or cardboard and oxygen and aroma proof barrier layers (4.5) consisting of ethylene-vinyl alcohol copolymer and polyamide layers, characterized in that the weight of the polyamide layer (4) is in the range of 1 to 8 g/m², that the layer (5) of ethylene-vinyl alcohol copolymer and the layer (4) of polyamide are joined together without an intermediate adhesive layer, and that the material includes polymeric heat-sealing layers (2,7) on both sides so that the core (3) and the said barrier layers (4,5) are situated between the heat-sealing layers.

2. A packaging material in accordance with claim 1, characterized in that the barrier layers (4,5) joined together are placed directly against the core (3) of paper or cardboard without an intermediate adhesive layer.

3. A packaging material in accordance with one of the claims 1 or 2, characterized in that the barrier layers (4,5) in the material are arranged in such a way that the polyamide layer (4) is closer to the paper or cardboard core (3).

4. A packaging material in accordance with one of the claims 1 or 2, **characterized** in that the barrier layers (4,5) in the material are arranged in such a way that the ethylene-vinyl alcohol copolymer layer (5) is closer to the paper or cardboard core (3).

5. A packaging material in accordance with any of the preceding claims, **characterized** in that the heat-sealing layers (2,7) forming the surface layers of the material are made of polyolefine, such as low-density polyolefine.

6. A packaging material in accordance with any of the preceding claims, **characterized** in that the weight of the polyamide layer (4) is 2 to 5 g/m².

7. A packaging material in accordance with any of the preceding claims, **characterized** in that the weight of the ethylene-vinyl alcohol copolymer layer (5) is in the range of 1 to 8 g/m².

8. A packaging material in accordance with any of the preceding claims, **characterized** in that the weight of each of the heat-sealing layers (2,7) is in the range of 5 to 50 g/m².

9. A method for manufacturing a packaging material of any of the claims 1-8, in which the polymeric laminate layers are placed on the paper or cardboard core (3) by extrusion, **characterized** in that the ethylene-vinyl alcohol copolymer (5) and polyamide (4) are placed against each other in molten webs, and thus forwarded to the core (3) in one, combined layer.

10. A sealed package for liquid food, **characterized** in that the package is manufactured by heat-sealing from a packaging material of any of the claims 1-8.

## Patentansprüche

1. Beschichtetes Verpackungsmaterial (1) vor allem für heißverschweißbare Flüssiglebensmittel-Verpackungen, das einen Kern (3) aus Papier oder Pappkarton sowie Sauerstoff- und aromaundurchlässige Schutzschichten (4, 5), die aus Ethylen-Vinylalkohol-Copolymer und Polyamidschichten bestehen, umfaßt, dadurch gekennzeichnet, daß das Gewicht der Polyamidschicht (4) im Bereich von 1 bis 8 g/m² liegt, daß die Schicht (5) aus Ethylen-Vinylalkohol-Copolymer und die Schicht (4) aus Polyamid ohne adhäsive Zwischenschicht miteinander verbunden sind, und daß das Material polymere Heißversiegelungsschichten (2, 7) an beiden Seiten umfaßt, so daß der Kern (3) und die Schutzschichten (4, 5) zwischen den Heißversiegelungsschichten angeordnet sind.

2. Verpackungsmaterial nach Anspruch 1, dadurch gekennzeichnet, daß die miteinander verbundenen Schutzschichten (4, 5) direkt gegen den Kern (3) aus Papier oder Pappkarton ohne eine adhäsive Zwischenschicht plaziert sind.

3. Verpackungsmaterial nach Anspruch 1 oder 2, dadurch gekennzeichnet, daß die Schutzschichten (4, 5) im Material so angeordnet sind, daß die Polyamidschicht (4) näher am Papier- oder Pappkarton-Kern (3) liegt.

4. Verpackungsmaterial nach Anspruch 1 oder 2, dadurch gekennzeichnet, daß die Schutzschichten (4, 5) im Material so angeordnet sind, daß die Ethylen-Vinylalkohol-Copolymerschicht (5) näher am Papier- oder Pappkarton-Kern (3) liegt.

5. Verpackungsmaterial nach einem der vorhergehenden Ansprüche, dadurch gekennzeichnet, daß die die Oberflächenschichten des Materials bildenden Heißversiegelungsschichten (2, 7) aus Polyolefin, wie z.B. Polyolefin geringer Dichte (LD-Polyolefin) bestehen.

6. Verpackungsmaterial nach einem der vorhergehenden Ansprüche, dadurch gekennzeichnet, daß das Gewicht der Polyamidschicht (4) 2 bis 5 g/m² beträgt.

7. Verpackungsmaterial nach einem der vorhergehenden Ansprüche, dadurch gekennzeichnet, daß das Gewicht der Ethylen-Vinylalkohol-Copolymerschicht (5) im Bereich von 1 bis 8 g/m² liegt.

8. Verpackungsmaterial nach einem der vorhergehenden Ansprüche, dadurch gekennzeichnet, daß das Gewicht einer jeden der Heißversiegelungsschichten (2, 7) im Bereich von 5 bis 50 g/m² liegt.

9. Verfahren zur Herstellung eines Verpackungsmaterials nach einem de Ansprüche 1 bis 8, bei dem die Polymerschichten durch Extrusion auf dem Papier oder Pappkarton (3) angebracht werden, dadurch gekennzeichnet, daß das Ethylen-Vinylalkohol-Copolymer (5) und das Polyamid (4) als aufgeschmolzene Bahnen gegeneinander plaziert und zum Kern (3) in einer kombinierten Schicht befördert werden.

10. Versiegelte Verpackung für Flüssiglebensmittel, dadurch gekennzeichnet, daß die Verpackung durch Heißversiegelung von Verpackungsmaterial nach einem der Ansprüche 1 bis 8 hergestellt wird.

## Revendications

1. Un matériau d'emballage stratifié (1), spécialement pour des emballages thermoscellables d'aliments liquides, comprenant un coeur (3), en papier ou en carton, et des couches (4, 5) formant barrière étanche à l'oxygène et aux arômes, constituées de couches en copolymère éthylène-alcool vinylique et en polyamide, **caractérisé** en ce que le poids de la couche (4) en polyamide est de l'ordre de 1 à 8 g/m², en ce que la couche (5) en copolymère éthylène-alcool vinylique et la couche (4) en polyamide sont reliées ensemble sans couche adhésive intermédiaire, et en ce que le matériau comprend, sur ses deux faces, des couches (2, 7) de thermoscellage en polymère, de sorte que le coeur (3) et lesdites couches (4, 5) formant barrière soient situées entre les couches de thermoscellage.

2. Un matériau d'emballage selon la revendication 1, **caractérisé** en ce que les couches (4, 5) formant barrière, reliées ensemble, sont placées directement contre le coeur (3) en papier ou en carton, sans couche adhésive intermédiaire.

3. Un matériau d'emballage selon l'une des revendications 1 ou 2, **caractérisé** en ce que les couches (4, 5) formant barrière prévues dans le matériau sont agencées de sorte que la couche (4) en polyamide soit dans le voisinage immédiat du coeur (3) en papier ou en carton.

4. Un matériau d'emballage selon l'une des revendications 1 ou 2, **caractérisé** en ce que les couches (4, 5) formant barrière, présentes dans le matériau, sont agencées de sorte que la couche (5) en copolymère éthylène-alcool vinylique soit dans le voisinage immédiat du coeur (3) en papier ou en carton.

5. Un matériau d'emballage selon l'une quelconque des revendications précédentes, **caractérisé** en ce que les couches (2, 7) de thermoscellage formant les couches de surface du matériau sont constituées de polyoléfine, telle qu'une polyoléfine basse densité.

6. Un matériau d'emballage selon l'une quelconque des revendications précédentes, **caractérisé** en ce que le poids de la couche (4) en polyamide est de 2 à 5 g/m².

7. Un matériau d'emballage selon l'une quelconque des revendications précédentes, **caractérisé** en ce que le poids de la couche (5) en copolymère éthylène-alcool vinylique est de l'ordre de 1 à 8 g/m².

8. Un matériau d'emballage selon l'une quelconque des revendications précédentes, **caractérisé** en ce que le poids de chacune des couches (2, 7) thermoscellables est de l'ordre de 5 à 50 g/m².

9. Un procédé de fabrication d'un matériau d'emballage selon l'une quelconque des revendications 1-8, selon lequel les couches stratifiées en polymère sont placées sur le coeur (3) en papier ou en carton, par extrusion, **caractérisé** en ce que le copolymère éthylène-alcool vinylique (5) et le polyamide (4) sont placés l'un contre l'autre en nappes fondues et sont ainsi envoyées, en une couche combinée, vers le coeur (3).

10. Un emballage scellé pour un produit alimentaire liquide, caractérisé en ce que l'emballage est fabriqué par thermoscellage à partir d'un matériau d'emballage selon l'une quelconque des revendications 1-8.
